# EUROPÄISCHE PATENTANMELDUNG

(11) **EP 0 621 117 A1**
(43) Veröffentlichungstag der Anmeldung: **26.10.1994**
(21) Anmeldenummer: 94104152.7
(22) Anmeldetag: 17.03.1994
(51) Int. Cl.: B29B 17/02, B29B 13/10, B02C 18/44, B02C 4/12, B02C 23/08

(54) **Verfahren und Vorrichtung zur Aufbereitung mit metallischen Materialien und/oder Gewebefäden bewehrten Gummi- und/oder Kunststoffstücken**

(30) Priorität: 01.04.1993 DE 4310689
(71) Anmelder: Ingenieurbüro S. Ficker Verfahrenstechnik, D-81667 München (DE)
(72) Erfinder: Ficker, Stefan, D-81667 München (DE); Rachor, Alfred, D-63533 Mainhausen (DE)
(74) Vertreter: Helms, Joachim, Dipl.-Ing. Patentanwalt

(57) **Zusammenfassung**

Die Erfindung betrifft ein Verfahren und eine Vorrichtung zur Aufbereitung von mit metallischen Materialien und/oder Gewebefäden bewehrten Gummi- und/oder Kunststoffstücken, insbesondere vorzerkleinerter Stahlgürtelreifen. Das Verfahren ist dadurch gekennzeichnet, daß die Gummi- und/oder Kunststoffstücke (7) zwischen zwei Druckelementen (1,2), von denen vorzugsweise der Druckkörper (2) eine gitterförmige Oberflächenstruktur aufweist, taktweise mit einer Druckbeanspruchung von über 5 t eingespannt und durch eine Relativ-bewegung mindestens eines der Druckelemente einer Scherbeanspruchung unterworfen werden. Die Druckelemente bestehen vorzugsweise aus einer konkav ausgebildeten Druckplatte (2) und einem konvex ausgebildeten Druckkörper (1), wobei der Druckkörper mittels eines Getriebes taktweise auf die Druckplatte zuführbar und entlang dieser mit Spiel bewegbar ist.

## Beschreibung

Die Erfindung betrifft ein Verfahren sowie eine Vorrichtung zur Durchführung des Verfahrens gemäß dem Oberbegriff des Anspruchs 1.

Die Entsorgung und Verwertung von Gummi-und/oder Kunststoffstücken gewinnt angesichts der allgemeinen Problematik zunehmend an Bedeutung. Nach dem Abfallgesetz, 5. Novelle, wurde die bisherige rechtliche Gleichgewichtung von stofflicher und thermischer Verwertung aufgegeben, d.h. die Verwertung hat vor der Lagerung oder Verbrennung Priorität.

Allein in den USA liegen derzeit über 2 Milliarden abgenutzter Fahrzeugreifen auf Halden, zu denen jährlich etwa 270 Millionen Stück hinzu kommen.

Der Umfang der stofflichen Verwertung von Altreifen ist trotz des beachtlichen Anfalls relativ gering. Das Haupthindernis für eine stärkere stoffliche Verwertung liegt darin, daß es aus technischer und wirtschaftlicher Sicht bislang noch kein zufriedenstellendes Verfahren zur Trennung von Stahl und Gummi bei Stahlgürtelreifen gibt.

Aus der deutschen Patentschrift DE 26 08 383 C3 ist ein Verfahren zum Aufbereiten insbesondere von Stahlgürtelreifen und Reifenwülsten bekannt. Bei diesem Verfahren werden vorzerkleinerte, langgestreckte Reifenstücke auf ein ebenes Gegenlager aufgelegt und durch abrollende Rotationskörper mit glatter Oberfläche einer Druckbeanspruchung von 5 bis 500 t unterworfen.

Die großtechnische Verwirklichung dieses Verfahrens scheitert allerdings an der schwierigen Zu-und Abführung der Reifenstücke und der Erkenntnis, daß über ein Dutzend Überrollungen für eine Stofftrennung in Gummi und Stahl erforderlich sind.

Eine gewisse Verbesserung konnte mit einem aus der deutschen Offenlegungsschrift DE 32 32 061 A1 bekannten Verfahren erzielt werden. Bei diesem bekannten Verfahren ist die Oberfläche einer Gegendruckplatte und gegebenenfalls die Oberfläche einer Druckwalze aufgerauht und vorzugsweise geriffelt oder gezahnt ausgebildet. Bei einer zusätzlichen Erwärmung der vorzerkleinerten Reifenstücke auf eine Temperatur zwischen 100 und 150° C, konnte die Anzahl der erforderlichen Überrollungen aufgrund der größeren Haltekraft auf etwa 4 bis 5 Überrollungen reduziert werden. Allerdings beeinträchtigt die hohe Temperatur die Qualität des Gummigranulates bzw. Gummimehles. Da bei beiden Verfahren die Druckelemente durch Überrollen aufeinanderlaufen, ist der Verschleiß der Druckelemente sehr hoch. Bereits nach einer Verarbeitungsmenge von 5 bis 15 t ist ein Nachfräsen der Zähne bzw. Walzen erforderlich.

Der Reinheitsgrad von Gummi und Stahl ist allerdings sowohl bei diesem als auch bei dem vorgenannten Verfahren verbesserungsbedürftig. Ferner läßt sich auch bei diesem Verfahren eine kontinuierliche Arbeitsweise nur durch aufwendige Maßnahmen realisieren, sodaß die erzeugten Endprodukte einen Relativ hohen Preis aufweisen, der derzeit vom Markt nicht angenommen wird.

Weiter wurde versucht, mit Kälteverfahren eine Aufbereitung des Altgummis zu erreichen. Diese Verfahren haben sich jedoch aus wirtschaftlichen Gründen nicht bewährt, da für die Versprödung des Gummis etwa 0,5 bis 1,0 kg N₂ benötigt werden. Je nach Abnahmemenge und Standort belaufen sich die N₂-Kosten auf 0,30 bis 0,80 DM/kg. Zieht man bei den beiden Parametern jeweils den Mittelwert heran, schlägt allein die Kälte mit 0,41 DM/kg Gummi zu Buche. An elektrischer Energie für die Hammermühle und Drehtrommel kommen noch ca. 0,55 kWh/kg Gummi hinzu, entsprechend 0,08 DM/kg Gummi. Damit addieren sich die Kosten bei der Kälte auf 0,49 DM/kg Gummi. Im günstigsten Fall 0,15 DM/kg Gummi. Außerdem ist die Gummiausbeute bei Kälte wesentlich geringer.

Demgegenüber werden bei den obengenannten Verfahren für das Zerkleinern der Ganzreifen ca. 0,1 kWh/kg Gummi und für die weitere Zerkleinerung/Trennung der vorzerkleinerten Gummistücke ca. 0,25 kWh/kg Gummi benötigt. Demzufolge betragen bei diesem oder ähnlichen Verfahren die überschlägigen Energiekosten ca. 0,05 DM/kg Gummi.

Aufgabe der vorliegenden Erfindung ist es, ein Verfahren der eingangs genannten Art zu schaffen, das einen schnellen und kostengünstigen Aufschluß von metallischen Materialien und/oder Gewebefäden aus vorzerkleinerten, entsprechend bewehrten Gummi- und/oder Kunststoffstücken bei geringstem Werkzeugverschleiß sicherstellt sowie eine kontinuierliche Arbeitsweise und trennscharfe Sortierung der aufgeschlossenen Bestandteile ermöglicht.

Diese Aufgabe wird durch die kennzeichnenden Merkmale des Anspruchs 1 gelöst.

Die erfindungsgemäße Lösung ergibt ein Verfahren, mit dem insbesondere vorzerkleinerte Stahlgürtelreifen kostengünstig in Gummi, Stahldrähte und Gewebefäden trennbar sind. Die erfindungsgemäße Ausgestaltung und Bewegungssteuerung zweier Druckelemente gewährleistet bei kontinuierlicher Arbeitsweise einen äußerst schnellen Aufschluß der Bewehrungsmaterialien, sodaß eine optimale Trennschärfe bei einer nachfolgenden Sortierung erreichbar ist.

Die erfindungsgemäße Lösung geht von der Erkenntnis aus, daß die vorzerkleinerten Gummi- und/oder Kunststoffstücke zur Erzeugung einer ausreichenden Scherbeanspruchung einer hohen Druckbeanspruchung ausgesetzt werden müssen. Mit zunehmendem Druck setzt beim Gummi jedoch ein viskoelastisches Fließen ein, das, wie bei den aus der DE 26 08 383 C3 und der DE 32 32 061 A1 bekannten Verfahren, einen raschen Aufschluß der Stahldrähte erheblich verzögert.

Diese Erkenntnis führte zu dem Schluß, daß die Bewegung der beiden Druckelemente und mindestens eine ihrer Oberflächen derart gesteuert bzw. gestaltet werden müssen, daß ein seitliches Ausweichen des Gummis weitgehend verhindert wird.

Dies wird erfindungsgemäß dadurch erreicht, daß die Gummi- und/oder Kunststoffstücke zwischen zwei Druckelemente, von denen mindestens eines eine gitterförmige Oberflächenstruktur aufweist, taktweise mit einer Druckbeanspruchung von über 5 t eingespannt und durch eine Relativbewegung mindestens eines der Druckelemente einer Scherbeanspruchung unterworfen werden.

Eine bevorzugte Ausgestaltung der erfindungsgemäßen Lösung besteht darin, daß die Druckbeanspruchung der vorzerkleinerten Gummi- und/oder Kunststoffstücke 100 bis 1000 t beträgt. Hierdurch wird sichergestellt, daß der Aufschluß der Bewehrungsmaterialien durch die nachfolgende Scherbeanspruchung besonders schnell erfolgt. Nur ca. 5 % des zerkleinerten Ausgangsmaterials müssen nach einmaligem Takt rezirkuliert werden.

Eine vorteilhafte Ausgestaltung des erfindungsgemäßen Verfahrens ist dadurch gekennzeichnet, daß die Gummi- und/oder Kunststoffstücke vor der Druck- und Scherbeanspruchung auf einen Durchmesser kleiner 6 cm vorzerkleinert werden, vorzugsweise auf 18 bis 25 mm Körnung. Diese Zerkleinerung verkürzt die Aufschlußzeit der Bewehrungsmaterialien erheblich und läßt sich mittels einer Shreddervorrichtung auf relativ einfache Weise realisieren. Fernerwerden durch eine derartige Vorzerkleinerung die Transporteigenschaften der Gummi- und/oder Kunststoffstücke hinsichtlich einer taktweisen Zuführung zu den beiden Druckelementen verbessert.

Zur Erhöhung des Aufschlußgrades werden die Gummi- und/oder Kunststoffstücke nach der Druck-und Scherbeanspruchung in einer vorteilhaften Ausgestaltung des Verfahrens klassiert, wobei Stücke mit einem Durchmesser von größer ca 12 mm abgetrennt und erneut einer Druck- und Scherbeanspruchung unterworfen werden. Durch diese Ausgestaltung läßt sich ein besonders hoher Reinheitsgrad der zu trennenden Materialien erzielen und die Verweilzeit der bereits aufgeschlossenen Bewehrungsmaterialien innerhalb des Zerkleinerungsprozesses verrringern.

Eine weitere vorteilhafte Ausgestaltung der Erfindung besteht darin, daß die aufgeschlossenen metallischen Materialien und die Druck- und scherbeanspruchten Gummi- und/oder Kunststoffstücke mittels Magnetscheidung sortiert werden. Eine Magnetscheidung eignet sich hervorragend für eine kontinuierliche Arbeitsweise des erfindungsgemäßen Aufbereitungsverfahrens und ermöglicht darüber hinaus eine besonders trennscharfe Sortierung von Gummi und Stahldrähten.

Die aufgeschlossenen Gewebefäden und die druck- und scherbeanspruchten Gummi- und/oder Kunststoffstücke werden nach einer anderen vorteilhaften Ausgestaltung des Verfahrens mittels Sieben, Sichten, Absaugung und/oder elektrostatischer Abscheidung sortiert. Auch diese Sortierprozesse zeichnen sich durch hohe Trennschärfen aus und eignen sich ebenfalls füreine kontinuierliche Arbeitsweise des erfindungsgemäßen Verfahrens.

Eine Vorrichtung zur Durchführung des Verfahrens weist zwei Druckelemente auf, die aus einer konkav ausgebildeten Druckplatte und einem konvex ausgebildeten Druckkörper bestehen, wobei der Druckkörper mittels eines Getriebes taktweise auf die Druckplatte zuführbar und entlang dieser mit Spiel bewegbar ist.

Da sich die Druckplatte und der Druckkörper demzufolge nicht unmittelbar berühren, wird ein Verschleiß der Druckelemente im Gegensatz zu den aus der DE 26 08 383 C3 und der DE 32 32 061 A1 bekannten Vorrichtungen weitestgehend verhindert.

Eine vorteilhafte Ausgestaltung der erfindungsgemäßen Vorrichtung ist dadurch gekennzeichnet, daß der Druckkörper einen Abschnitt aufweist, dessen Krümmungsradius demjenigen der Druckplatte entspricht, und einen daran anschließenden Abschnitt aufweist, dessen Krümmungsradius kleiner als derjenige der Druckplatte ist, wobei der Druckkörper derart drehbar ist, daß zwischen der Druckplatte und seinem entsprechend gekrümmten Abschnitt zur Aufnahme kontinuierlich zugeführter Gummi- und/oder Kunststoffstücke ein sichelförmiger Spalt entsteht, der durch einen Drehrichtungswechsel des Druckkörpers bis auf ein vorgegebenes Spiel gegenüber der Druckplatte auf einen parallelen Spalt verkleinerbar ist.

Diese vorteilhafte Ausgestaltung stellt sicher, daß nach der Verkleinerung des sichelförmigen Spalts die vorzerkleinerten Gummi- und/oder Kunststoffstücke auf ganzer Länge parallel zwischen den Druckelementen eingespannt sind. Ein die Zerkleinerungsarbeit mindernder Zwickel, wie er etwa zwischen dem Gegenlager und der Druckwalze der vorbekannten Vorrichtungen auftritt, wird auf diese Weise ausgeschlossen.

Weitere bevorzugte Ausgestaltungen der Erfindung sind in den Unteransprüchen gekennzeichnet.

Ausführungsbeispiele der Erfindung sind in der Zeichnung dargestellt und werden im folgenden näher beschrieben. Es zeigen:
Fig.1 eine schematische Darstellung der Bewegung eines konvex ausgebildeten Druckkörpers entlang einer konkav ausgebildeten Druckplatte;
Fig.2 einen Auschnitt einer gitterförmigen Oberflächenstruktur eines der beiden Druckelemente,
Fig.3 eine schematische Darstellung einer Vorrichtung zur Aufbereitung von vorzerkleinerten, mit Metalldrähten und/oder Gewebefäden bewehrten Gummistücken, und
Fig.4 eine schematische Darstellung einer bevorzugten Vorrichtung zur Durchführung des Verfahrens.

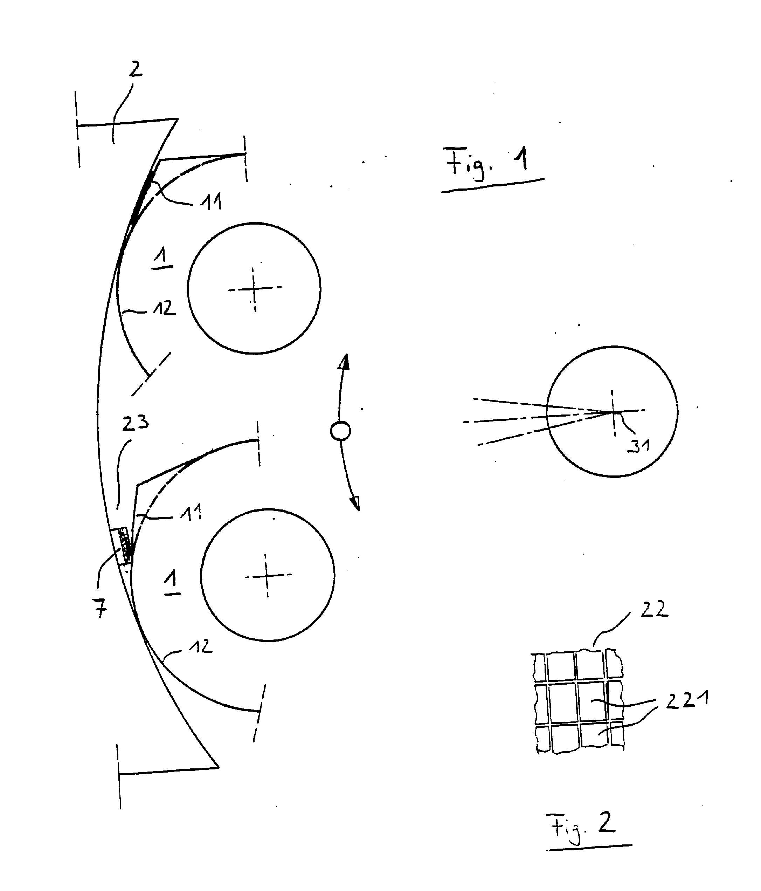

Der in Fig.1 dargestellte Druckkörper 1 ist mittels eines nachfolgend näher beschriebenen Getriebes taktweise entlang der Druckplatte 2 mit Spiel bewegbar.

Der Druckkörper 1 weist einen ersten Abschnitt 11 auf, dessen Krümmungsradius demjenigen der konkav ausgebildeten Druckplatte 2 entspricht, und einen zweiten Abschnitt 12 auf dessen Krümmungsradius kleiner als derjenige der Druckplatte 2 ist.

Der Druckkörper 1 ist mittels des Getriebes derart drehbar, daß zwischen der Druckplatte 2 und seinem entsprechend gekrümmten Abschnitt 11 zur Aufnahme taktweise zugeführter Gummi- und/oder Kunststoffstücke 7 ein sichelförmiger Spalt 23 entsteht. Die taktweise Zufuhr der Gummi- und/oder Kunststoffstücke 7 erfolgt aufgrund der über dem Spalt befindlichen Materialsäule kontinuierlich.

Wie im oberen Teil der Fig.l angedeutet, wird der sichelförmige Spalt 23 wenige cm nach derAufwärtsbewegung durch einen Drehrichtungswechsel des Druckkörpers 1 bis auf ein vorgegebenes paralleles Spiel konzentrisch gegenüber der Druckplatte 2 verkleinert, sodaß die zugeführten Gummi- und/oder Kunststoffstücke 7 einer im wesentlichen gleichmäßigen Druckbelastung unterworfen werden. Das vorgegebene Spiel beträgt vorzugsweise weniger als 1 mm, vorzugsweise 0,1 mm.

Diese Druckbelastung erfolgt mit einem Druck von mehr als 5 t, vorzugsweise mit einem Druck zwischen 100 und 1000 t, wobei die Gummi- und/oder Kunststoffstücke 7 auf ihrer ganzen Länge parallel zwischen der Druckplatte 2 und dem Abschnitt 11 des Druckkörpers 1 eingespannt sind.

Um ein die Zerkleinerung erschwerendes seitliches Ausweichen der Gummi- und/oder Kunststoffstücke 7 zu verhindern, ist das Druckelement und/oder der Druckkörper 1 mit einer gitterförmigen Oberflächenstruktur 22 versehen. Dadurch kann der Gummi nur noch in Zerkleinerungsrichtung nach oben bewegt werden.

Wie in Fig.2 verdeutlicht ist, besteht diese Oberflächenstruktur vorzugsweise aus schmalen, nebeneinander angeordneten Kammern 221. Vorzugsweise weisen die Kammern in Zerkleinerungsrichtung verlaufende ebene Seitenwände und quer zur Zerkleinerungsrichtung als Sägezahnprofil ausgebildete Vorder- und Rückwände auf. Dabei sind die Vorder- bzw. Rückwände um 30 bzw. 60 Grad geneigt. Die ebenen Seitenwände können durch in Längsnuten des Sägezahnprofils eingesetzte Passfedern ausgebildet werden. Die Passfedern sind dabei in Zerkleinerungsrichtung versetzt zu einander angeordnet, da im Bereich der Passfedern keine Zerkleinerung stattfindet und außerdem an den versetzten Kanten der Passfedern der Gummi aufgerissen wird. Dabei ist die Druckplatte 2 wabenförmig ausgebildet. Darüber hinaus sind aber auch andere Gitterformen denkbar, die ein seitliches Ausweichen der eingespannten Gummi- und/oder Kunststoffstücke 7 begrenzen. Beispielsweise kann die gitterförmige Oberflächenstruktur auch durch wabenförmige Kammern realisiert werden.

Nachdem die Gummi- und/oder Kunststoffstücke 7 eingespannt sind, wird der Druckkörper 1 entlang der Druckplatte 2 aufwärts geführt, sodaß die unter hohem Druck eingespannten Gummi- und/oder Kunststoffstücke 7 einer starken Scherbelastung unterworfen und dabei zerkleinertwerden. Am Ende der folgenden Abwärtsbewegung wird der Abstand zwischen Druckplatte 2 und Druckkörper 1 durch Gleitschienen 21 soweit vergrößert, daß die zerkleinerten Bestandteile zu nachgeschalteten Sortiereinrichtungen gelangen. Damit ist ein Arbeitszyklus beendet. In der unteren Ausgangsstellung wird der Druckkörper 1 sodann erneut im Uhrzeigersinn verdreht, sodaß zwischen seinem Abschnitt 11 und der Druckplatte 2 wiederum der sichelförmige Spalt 23 entsteht.

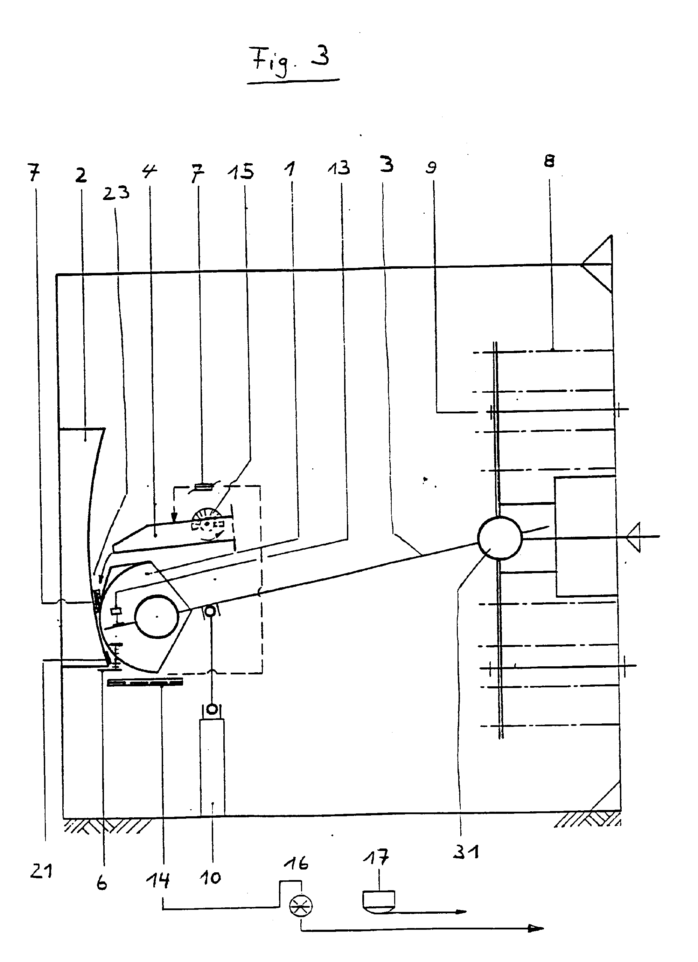

In Fig.3 ist eine Vorrichtung zur Durchführung des erfindungsgemäßen Verfahrens schematisch dargestellt, die die oben beschriebene Druckplatte 2 und den Druckkörper 1 aufweist.

Der Druckkörper 1 wird von einem Schwenkarm 3 getragen, der mittels mindestens eines Hydraulikzylinders 10 entlang der Druckplatte 2 heb-und senkbar ist. Dabei ist der Druckkörper 1 zum Schwenkarm 3 relativ in einem durch Anschläge 13 begrenzten Bereich relativ drehbeweglich. Zur Unterstützung der Drehbewegung des Druckkörpers 1 in der unteren Stellung ist das aus dem Schwenkarm 3 und mindestens einem Hydraulikzylinders 10 bestehende Getriebe vorzugsweise mit einer Rückholfeder 6 versehen.

Die Rückholfeder 6 drückt in der untersten Stellung den Druckkörper 1 in Richtung des Uhrzeigersinns, wodurch erneut ein Spalt gebildet wird, in den das Material hereinfallen kann. Die Schwenkachse 31 des Schwenkarms 3 ist ferner durch Federelemente 8 abgestützt, die mittels einer Gewindestangen aufweisenden Spannvorrichtung 9 vorspannbar sind.

Wie bereits erwähnt, ist der Druckkörper 1 mit Anschlägen 13 versehen, wobei der obere Anschlag die Verkleinerung des sichelförmigen Spalts bei einem entgegen dem Uhrzeigersinn gerichteten Drehrichtungswechsel des Druckkörpers 1 auf das vorgegebene Spiel begrenzt.

Am unteren Ende der Druckplatte 2 ist eine Gleitschiene 21 angebracht, die beim Aufgleiten des Druckkörpers 1 das zwischen Druckplatte und Druckkörper vorgegebene Spiel auf mehr als 4 mm vergrößert. Die durch Druck- und Scherbeanspruchung zerkleinerten Gummi- und/oder Kunststoffstücke 7 gelangen auf diese Weise zunächst auf ein nachgeschaltetes Sieb 14.

Wie bereits erwähnt, dient die Gleitschiene 21 zur Vergrößerung des Spalts zwischen Druckkörper und Druckplatte.

Es ist ebenfalls möglich, daß mittels der Gleitschiene 21 ein nicht näher dargestellter am Druckkörper 1 angeordneter Druckkontakt betätigt wird, der eine Drehung des aufgleitenden Druckkörpers 1 im Uhrzeigersinn auslöst, sodaß sich erneut zwischen der Druckplatte 2 und dem entsprechenden gekrümmten Abschnit 11 des Druckkörpers 1 ein sichelförmiger Spalt 23 ausbildet. Hierdurch erhält man eine höhere Toleranz bei der Auslegung des Hydraulikzylinders 10. Der Drehrichtungswechsel des Druckkörpers 1 kann allerdings auch durch andere im Bereich des Schwenkarms 3 oder des Hydraulikzylinders 10 angeordnete Schalter oder Sensoren ausgelöst werden.

Es sei noch einmal darauf hingewiesen, daß die Relativbewegung zwischen dem Druckkörper 1 und dem Schwenkarm 3 nur im Bereich des oberen und unteren Anschlags 13 erfolgt. Dabei wird in der obersten Stellung des Druckkörpers 1 ein Spalt von ca. 0,1 bis 0,3 mm und in der untersten Stellung ein Spalt von 1 bis 4 mm ausgebildet.

Die Zuführung der auf einen Durchmesser von vorzugsweise kleiner 6 cm vorzerkleinerten Gummi-und/oder Kunststoffstücke 7 erfolgt im Ausführungsbeispiel gemäß Fig.3 mittels eines Schwingförderers 4. In der Schurre des Schwingförderers 4 ist eine drehbare Stachelwalze 15 angeordnet, durch die die Zuführung der vorzerkleinerten Gummi- und/oder Kunststoffstücke 7 gesteuert wird.

Gummi- und/oder Kunststoffstücke, die die Druckelemente 1,2 mit einem Durchmesser von vorzugsweise über 1 cm verlassen, werden mit Hilfe des Siebes 14 abgetrennt, und über den Schwingförderer erneut den Druckelementen zugeführt.

Das Unterkorn wird dagegen einer Schleuder 16 zugeführt, in der noch geringfügig mit Gummi- und/oder Kunststoffstücken verbundene Metalldrähte oder Gewebefäden voneinander getrennt werden.

Zur Sortierung der aufgeschlossenen metallischen Materialien dient anschließend ein Magnetscheider 17, während die Sortierung aufgeschlossener Gewebefäden vorzugsweise durch Sieben, Sichten, Absaugung und/oder elektrostatische Abscheidung erfolgt.

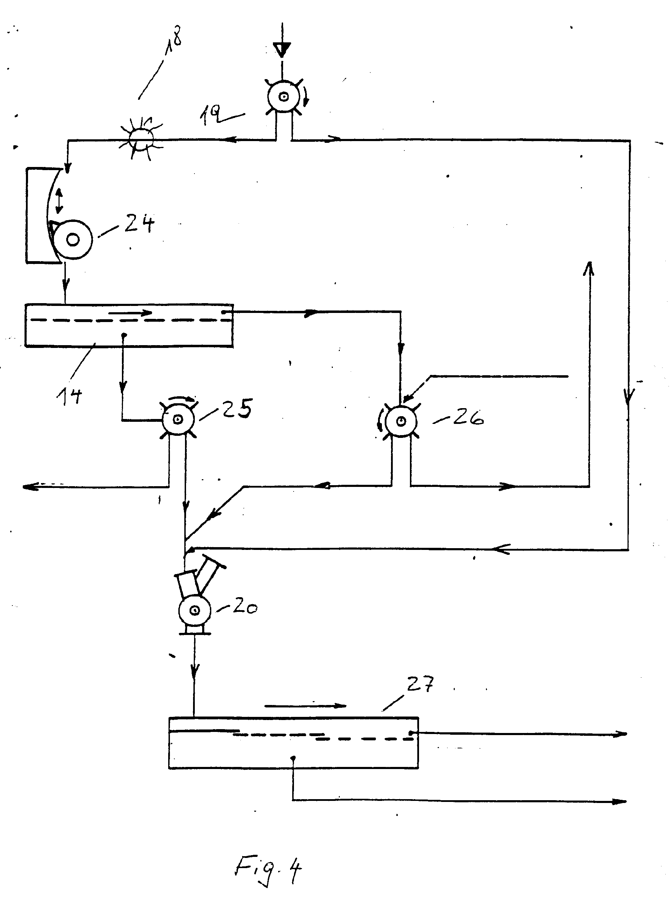

In Fig.4 ist eine bevorzugte Vorrichtung zur Durchführung des erfindungsgemäßen Verfahrens schematisch dargestellt, die ebenfalls die zuvor beschriebenen Druckelemente 1 und 2 aufweist.

Die Zuführung der vorzerkleinerten Gummi-und/oder Kunststoffstücke 7 erfolgt in diesem Fall mittels einer Stachelwalze 18 und einem Magnetscheider 19. In diesem Fall wird der reine Gummianteil mit einem Durchmesser von weniger als 18 mm direkt einer Schneidmühle 20 zugeführt. Der aus Gummi, Stahl und Textilfäden bestehende Anteil gelangt in die aus dem Druckelementen bestehende Rolldrückmaschine 24. Das aus der Rolldrückmaschine 24 austretende Material gelangt auf ein Sieb 14 von dem der aus Gummi, Stahl und Textilfäden bestehende abgesiebte Anteil mit einer Korngröße von kleinerals 12 mm über einen Magnetscheider 25 zur Schneidmühle 20 geführt wird. Der mittels des Magnetscheiders 25 abgeschiedene Stahl wird zur Weiterverarbeitung z.B. in einen Ofen geleitet.

Der Rückstand des Siebes 14 mit einer Korngröße von größer als 12 mm gelangt über einen weiteren Magnetabscheider 26 von dem der abgetrennte Gummi ebenfalls der Schneidmühle 20 zugeführt wird. Der vom Magnetabscheider 26 abgetrennte Gummi, Stahl und Textilfäden enthaltende Anteil mit einer Korngröße von größer als 12 mm, wird als Rücklauf erneut der Rolldrückmaschine 24 zugeführt. Aus der Schneidmühle 20 gelangt nunmehr der nur noch Gummi und Textilfäden enthaltende Anteil auf ein Rüttelsieb 27, das vorzugsweise in Förderrichtung ein Rüttelblech, ein Sieb mit feinerer Maschenweite und ein Sieb mit größerer Maschenweite aufweist. In diesem Sieb wird der Gummi mittels Vibration von den Textilfäden getrennt, wobei sich die Textilfäden verknäulen und als Textilwolle abgeführt werden. Der abgesiebte Gummi hat vorzugsweise eine Korngröße von kleiner als 2 mm.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

## Patentansprüche

1. Verfahren zur Aufbereitung von mit metallischen Materialien und/oder Gewebefäden bewehrten Gummi- und/oder Kunststoffstücken, insbesondere vorzerkleinerter Stahlgürtelreifen, dadurch gekennzeichnet, daß die Gummi- und/oder Kunststoffstücke (7) zwischen zwei Druckelemente (1,2), von denen mindestens eines, vorzugsweise Druckkörper (2) eine gitterförmige Oberflächenstruktur aufweist, taktweise mit einer Druckbeanspruchung von über 5 t eingespannt und durch eine Relativbewegung mindestens eines der Druckelemente (1,2) einer Scherbeanspruchung unterworfen werden.

2. Verfahren nach Anspruch 1, dadurch gekennzeichnet, daß die Druckbeanspruchung 100 bis 1000 t beträgt.

3. Verfahren nach Anspruch 1 oder 2, dadurch gekennzeichnet, daß die Gummi- und/oder Kunststoffstücke (7) vor der Druck- und Scherbeanspruchung auf einen Durchmesser kleiner 6 cm vorzerkleinert werden.

4. Verfahren nach einem der vorangehenden Ansprüche, dadurch gekennzeichnet, daß die Gummi- und/oder Kunststoffstücke (7) nach der Druck- und Scherbeanspruchung klassiert werden, wobei Stücke mit einem Durchmesser größer 1 cm abgetrennt und erneut einer Druck- und Scherbeanspruchung unterworfen werden.

5. Verfahren nach einem der vorangehenden Ansprüche, dadurch gekennzeichnet, daß die Gummi- und/oder Kunststoffstücke (7) nach der Druck- und Scherbeanspruchung geschleudert werden.

6. Verfahren nach einem der vorangehenden Ansprüche, dadurch gekennzeichnet, daß die aufgeschlossenen metallischen Materialien und die druck- und scherbeanspruchten Gummi- und/oder Kunststoffstücke (7) mittels Magnetscheidung sortiert werden.

7. Verfahren nach einem der vorangehenden Ansprüche, dadurch gekennzeichnet, daß die aufgeschlossenen Gewebefäden und die druck- und scherbeanspruchten Gummi- und/oder Kunststoffstücke (7) mittels Sieben, Sichten, Absaugung und/oder elektrostatischer Abscheidung sortiert werden.

8. Verfahren nach einem der vorangehenden Ansprüche, dadurch gekennzeichnet, daß die Gummi- und/oder Kunststoffstücke (7) mittels eines Schwingförderers (4) den Druckelementen (1,2) zugeführt werden.

9. Verfahren nach einem der vorangehenden Ansprüche, dadurch gekennzeichnet, daß die taktweise Zuführung der Gummi- und/oder Kunststoffstücke (7) mittels einer drehbaren Stachelwalze (18), die oberhalb des Schwingförderers (4) angeordnet ist, erfolgt bzw. dosiert wird.

10. Vorrichtung zur Durchführung des Verfahrens nach einem der vorangehenden Ansprüche, dadurch gekennzeichnet, daß die Druckelemente aus einer konkav ausgebildeten Druckplatte (2) und einem konvex ausgebildeten Druckkörper (1) bestehen, wobei der Druckkörper (1) mittels eines Getriebes taktweise auf die Druckplatte (2) zuführbar und entlang dieser mit Spiel bewegbar ist.

11. Vorrichtung nach Anspruch 10, dadurch gekennzeichnet, daß der Druckkörper (1) einen Abschnitt (11) aufweist, dessen Krümmungsradius demjenigen der Druckplatte (2) entspricht, und einen daran anschließenden Abschnitt (12) aufweist, dessen Krümmungsradius kleiner als derjenige der Druckplatte (2) ist.

12. Vorrichtung nach Anspruch 11, dadurch gekennzeichnet, daß der Druckkörper (1) derart drehbar ist, daß zwischen der Druckplatte (2) und seinem entsprechend gekrümmten Abschnitt (11) zur Aufnahme der kontinuierlich zugeführten Gummi- und/oder Kunststoffstücke (7) ein sichelförmiger Spalt (23) entsteht, der durch einen Drehrichtungswechsel des Druckkörpers (1) bis auf ein vorgegebenes Spiel gegenüber der Druckplatte (2) verkleinerbar ist.

13. Vorrichtung nach Anspruch 12, dadurch gekennzeichnet, daß das Spiel in der untersten Stellung des Druckkörpers (1) ca. 1 bis 4 mm und in der obersten Stellung ca. 0,1 bis 0,3 mm beträgt.

14. Vorrichtung nach Anspruch 12 oder 13, dadurch gekennzeichnet, daß der Druckkörper (1) mit im Abstand voneinander angeordneten Anschlägen (13) versehen ist, die die Relativbewegung zwischen dem Druckkörper (1) und dem Schwenkarm (3) und damit die Verkleinerung des sichelförmigen Spalts (23) auf das vorgegebene parallele Spiel begrenzen.

15. Vorrichtung nach einem der vorangehenden Ansprüche 10 bis 14, dadurch gekennzeichnet, daß das Getriebe einen den Druckkörper (1) tragenden und durch mindestens einen Hydraulikzylinder (10) verfahrbaren Schwenkarm (3) umfaßt, dessen Schwenkachse mittels Federelementen (8) abgestützt ist.

16. Vorrichtung nach Anspruch 15, dadurch gekennzeichnet, daß die Federelemente (8) mittels einer Spannvorrichtung (9) vorspannbar sind.

17. Vorrichtung nach Anspruch 15 oder 16, dadurch gekennzeichnet, daß das Getriebe ferner eine Rückholfeder aufweist, die den entlang der Druckplatte (2) bewegten Druckkörper (1) in die Ausgangstellung zurückholt.

18. Vorrichtung nach Anspruch 17, dadurch gekennzeichnet, daß die Druckplatte (2) mit einer Gleitschiene (21) versehen ist, die das vorgegebene Spiel zwischen Druckplatte (2) und Druckkörper (1) in dessen Ausgangsstellung auf mehr als 4 mm vergrößert.

19. Vorrichutng nach Anspruch 18, dadurch gekennzeichnet, daß die Rückholfeder(6) und der untere Anschlag (13) eine Drehung des aufgleitenden Druckkörpers (1) auslöst, derart, daß sich zwischen diesem und der Druckplatte (2), der sichelförmige Spalt (23) zur Aufnahme von Gummi-und/oder Kunststoffstücken (7) bildet.
